Europäisches Patentamt

European Patent Office

Office européen des brevets

(19)

(11) Veröffentlichungsnummer: **0 313 802 B1**

(12) **EUROPÄISCHE PATENTSCHRIFT**

(45) Veröffentlichungstag der Patentschrift: **06.05.92**

(51) Int. Cl.⁵: **C01B 13/11**, H01T 19/00

(21) Anmeldenummer: **88115344.9**

(22) Anmeldetag: **19.09.88**

(54) **Ozonerzeuger.**

(30) Priorität: **27.10.87 CH 4210/87**

(43) Veröffentlichungstag der Anmeldung:
**03.05.89 Patentblatt 89/18**

(45) Bekanntmachung des Hinweises auf die
Patenterteilung:
**06.05.92 Patentblatt 92/19**

(84) Benannte Vertragsstaaten:
**CH DE FR GB LI**

(56) Entgegenhaltungen:
FR-A- 2 594 108
US-A- 3 671 417

**PATENT ABSTRACTS OF JAPAN, Band 4, Nr.
16 (C-72)[140], 7. Februar 1980, Seite 140 C
72; & JP-A-54 152 690 (TOKYO SHIBAURA
DENKI K.K.) 12-01-1979**

(73) Patentinhaber: **Ozonia AG
Schaffhauserstrasse 418
CH-8050 Zürich(CH)**

(72) Erfinder: **Fischer, Melchior, Dr.
Breiteweg
CH-8966 Lieli(CH)**
Erfinder: **Gaiffi, Nazareno
Winterhaldenstrasse 60
CH-5300 Turgi(CH)**

(74) Vertreter: **Ottow, Jens M. et al
Asea Brown Boveri AG Abteilung REI-
Immaterialgüterrecht
CH-5401 Baden(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

TECHNISCHES GEBIET

Die Erfindung bezieht sich auf einen Ozonerzeuger mit einer rohrförmigen Aussenelektrode und einer Mehrzahl von Innenelektroden, die auf ihrer der Aussenelektrode zugewandten Oberfläche eine dielektrische Schicht aufweisen, Mittel zur Distanzierung der Innenelektroden gegenüber der Aussenelektrode zur Bildung eines ringförmigen Entladungsspaltes und Mitteln zur elektrischen Verbindung aller Elektroden mit einer Wechselstromquelle.

Ozonisatoren dieser Gattung sind beispielsweise aus der CH-PS 648 534 bekannt.

TECHNOLOGISCHER HINTERGRUND

Die zunehmende Verwendung von Ozon für chemische und physikalische Zwecke hat dazu geführt, dass die auf Arbeiten von Siemens zurückgehende Ozonröhre in der jüngsten Vergangenheit in technischer und wirtschaftlicher Hinsicht entscheidend verbessert worden ist. So wird in der US-PS 28 11 217 vorgeschlagen, die Ozonausbeute dadurch zu erhöhen, dass bestimmte Kenngrössen des Ozonisators (Frequenz der Speisespannung, Dielektrizitätskonstante des dielektrischen Materials, Amplitude der Speisespannung, Dicke der Dielektrikumsschicht und Grösse des Entladungsspalts) bestimmte Gesetzmässigkeiten erfüllen müssen.

In anderen Publikationen werden zum gleichen Zweck spezielle Kühlmassnahmen vorgeschlagen, um die Ozonausbeute zu erhöhen, so z.B. neben der Flüssigkeitskühlung der Aussenelektrode die Innenkühlung der Hochspannungselektrode mit Gas oder Flüssigkeit in der DE-OS 23 57 392, oder die Zwischenkühlung des mit Ozon angereicherten Einsatzgases bei hintereinandergeschalteten Ozonisatoren in der DE-OS 24 36 914.

Es ist allgemein bekannt, dass durch eine Reduktion der Entladungsspaltweite in einem Röhrenozonerzeuger die mittlere Temperatur im Entladungsspalt hinunter gesetzt werden kann. Theoretisch und experimentell kann gezeigt werden, dass die mittlere Temperatur im Entladungsspalt proportional zu dessen Spaltweite ist.

Eine niedrige Temperatur im Entladungsspalt ist erwünscht, da dadurch der Wirkungsgrad der Ozonerzeugung markant gesteigert wird.

Stand der Technik sind heute Entladungsspaltweiten um 1 mm. Eine weitere Reduktion der Sapltweite stösst an die Grenzen der geometrischen Toleranzen der verwendeten Metall- und Dielektrikumsrohre. Insbesondere bei grösseren Rohrlängen ist eine weitere Reduktion der Spaltweite limitiert durch die immer vorhandenen Durchbiegungen der Dielektrikums- und Metallrohre.

DARSTELLUNG DER ERFINDUNG

Der Erfindung liegt die Aufgabe zugrunde, einen Ozonerzeuger zu schaffen, der kleine Spaltweiten ermöglicht und Ozonerzeuger grösserer Baulänge ermöglicht.

Zur Lösung dieser Aufgabe bei einem Ozonerzeuger der eingangs genannten Gattung ist erfindungsgemäss vorgesehen, dass die Innenelektroden aus einer Mehrzahl von mechanisch entkoppelten, hintereinander angeordneten Elektrodensegmenten bestehen, die gruppenweise galvanisch miteinander verbunden sind, und jedes Elektrodensegment unabhängig vom Aussenrohr distanziert abgestützt ist. Auf diese Weise lassen sich sowohl Simplexals auch Duplex-Ozonisatoren nahezu beliebiger Baulänge realisieren. Durchbiegungen der Aussenrohre haben keinen Einfluss auf die Spaltweite-Toleranz. Das Einsetzen der Innenrohre ist wesentlich erleichtert.

Die Elektrodensegmente können einseitig geschlossene Glasrohre sein mit einer metallischen Durchführung im Boden um das folgende Element elektrisch zu verbinden. Vorteilhafterweise werden jedoch Kunststoffdielektrika verwendet wie sie in DE-OS 34 42 121 oder US-PS 4,650,648 beschrieben wurden. Bei Kunststoffdielektrika lässt sich verhältnismässig einfach eine metallische Durchführung durch den Boden bewerkstelligen.

Die Verwendung eines segmentierten Dielektrikums führt zu weiteren Vorteilen. Die Metallrohre dürfen eine Durchbiegung bis einige mm aufweisen. Die Länge der Metallrohre ist nicht wie heute üblich auf ca. 2 m fixiert, Längen bis 6 m sind denkbar und erwünscht. Lange Metallrohre bringen Vorteile bei der Wasserkühlung derselben. Der Kühlwasserfluss kann längs den Metallrohren erfolgen was zu einer erwünschten Erhöhung des Kühlwasserflusses führt und dadurch zu einer besseren Kühlung. Dadurch werden auch unerwünschte wasserseitige Ablagerungen auf den Metallrohren reduziert.

KURZE BESCHREIBUNG DER ZEICHNUNGEN

In der Zeichnung sind Ausführungsbeispiele der Erfindung schematisch dargestellt:

Fig. 1    einen stark vereinfachten Längsschnitt durch einen Ozonisatorkessel mit einer Vielzahl von Ozonerzeugern,

Fig. 2    ein Detail aus Fig. 1 mit einem Ozonerzeuger mit Keramik-Dielektrikum,

Fig. 3    ein Detail aus Fig. 2 mit einer alternativen Kontaktierung benachbarter Innenelektroden,

Fig. 4    ein Detail aus Fig. 1 mit einem Ozonerzeuger mit Glasdielektrikum in Form einseitig geschlossener Glasrohre,

Fig. 5    ein Detail aus Fig. 1 mit einem Ozonerzeuger mit Glasdielektrikum in Form offener Glasrohre.

## AUSFÜHRLICHE BESCHREIBUNG DER ERFINDUNG

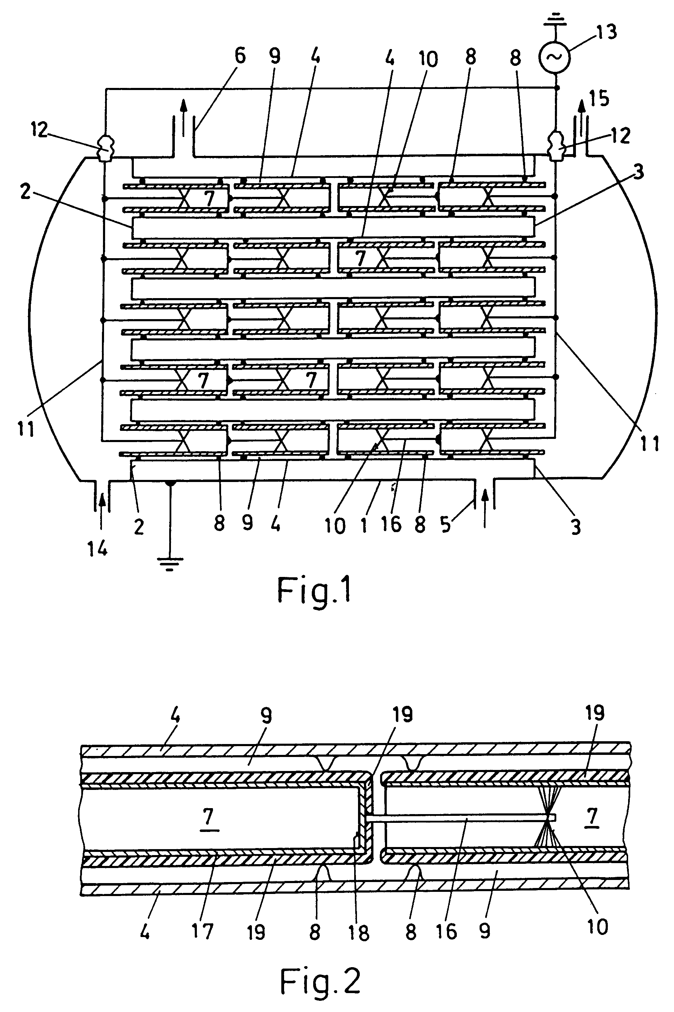

Fig. 1 zeigt in stark vereinfachter Darstellung einen Ozonisator, wie er derzeit für den industriellen Einsatz ausgeführt wird.

In einem Kessel 1 sind eine Vielzahl von Ozonerzeugern untergebracht. Der Kessel 1 weist endseitig rohrbodenartige Trennwände 2, 3 auf, in welche Metallrohre 4 eingeschweisst sind. Diese Metallrohre bilden die (auf Erdpotential liegenden) Aussenelektroden eines jeden Ozonerzeugers. Aus Gründen der Uebersichtlichkeit sind nur fünf dieser Rohre 4 eingezeichnet; in der Praxis können es 100 und mehr Rohre sein. Die Rohre sind an ihren Einspannstellen in den Trennwänden 2, 3 gegenüber dem Kesselinneren abgedichtet. Ueber Stutzen 5, 6 in der Kesselwand wird ein Kühlmittel, z.B. Wasser, in das Kesselinnere geleitet bzw. abgeführt, das zur Aussenkühlung der Metallrohre 4 dient. In die Metallrohre 4 sind von beiden Seiten segmentierte Innenelektroden 7 eingebracht, welche durch Distanzelemente 8 gegenüber den Metallrohren 4 distanziert und zwischen sich und den Metallrohrwänden ringförmige Entladungsspalte 9 freilassen.

Die Kontaktierung der Innenelektroden 7 erfolgt über bürstenartig ausgebildete Kontaktelement 10. Diese sind an den Stirnseiten an je eine Sammelschiene 11, 11′ angeschlossen. Ueber elektrische Durchführungen 12 sind diese Sammelschienen 11, 11′ mit einer Wechselstromquelle 13 einstellbarer Frequenz und/oder Amplitude und/oder Kurvenform verbunden, deren anderer Anschluss auf Erdpotential liegt.

Das sauerstoffhaltige Einsatzgas wird Ozonerzeugern über einen Gas-Einlassstutzen 14 zugeführt und verlässt den Kessel wieder durch den Gasauslassstutzen 15.

Wie aus Fig. 1 hervorgeht, sind jeweils zwei Innenelektroden 7 im linken bzw. rechten Kesselteil elektrisch galvanisch miteinander verbunden. Zu diesem Zweck führt der Anschlusteil 16 der Kontaktelemente der innenliegenden Innenelektroden an die Stirnseite der äusseren Innenelektroden 7.

Der detaillierte Aufbau der Innenelektroden 7 sowie deren gegenseitige elektrische Kontaktierung ist in Fig. 2 in vergrössertem Massstab dargestellt. Die Innenelektrode besteht im wesentlichen aus einem Metallrohr 17, das an seinem der Kesselstirnseite abgewandten Ende mit einem Deckel 18 verschlossen ist. Dieser Deckel 18 kann mit dem Metallrohr 17 auch einstückig ausgeführt sein. Die Aussenwand des Metallrohres 17 samt Deckel 18 ist mit einem typisch 2 mm dicken Dielektrikum 19 aus Keramik beschichtet. Am offenen Ende überdeckt das Dielektrikum 19 die Randzone des Metallrohres um unerwünschte Entladungen zu verhindern. Die gleiche Funktion erfüllt die Beschichtung des Deckels 18 Vorzugsweise besteht dabei diese dielektrische Schicht 19 aus dielektrischen Pulvern unterschiedlicher Korngrösse und Bindung mit Kunstharz. Einzelheiten über deren Aufbau und vorteilhafte Eigenschaften sind in der DE-OS 34 42 121 oder der US-PS 4,650,648 beschrieben, auf die hier ausdrücklich Bezug genommen wird.

Am Deckel 18 der äusseren Innenelektrode ist der Anschlussteil 16 des der inneren Innenelektrode zugeordneten Kontaktelements 10 befestigt, was durch Löten, Schweissen, Schrauben oder Klemmen erfolgen kann. Anstelle der dargestellten bürstenartigen Kontaktelemente 10 mit Anschlusteil können auch eine Kontaktanordnung 20 verwendet werden, die unmittelbar am Deckel der äusseren Innenelektrode angebracht ist und mit Kontaktfingern aus Berylliumbronze ähnlich Büschel- oder Tulpenkontakten versehen ist.

Wesentlich ist, dass einerseits die elektrische Verbindung der einzelnen Innenelektroden 7 untereinander gewährleistet ist, dass aber andererseits eine mechanische Entkopplung, d.h. nichtstarre Verbindung zwischen den benachbarten Innenelektroden vorhanden ist.

Sind diese Voraussetzungen erfüllt, lassen sich nahezu beliebig lange Ozonerzeuger mit geringen Spaltwerten (typisch 0,5 mm) und vertretbaren Spaltwertetoleranzen herstellen.

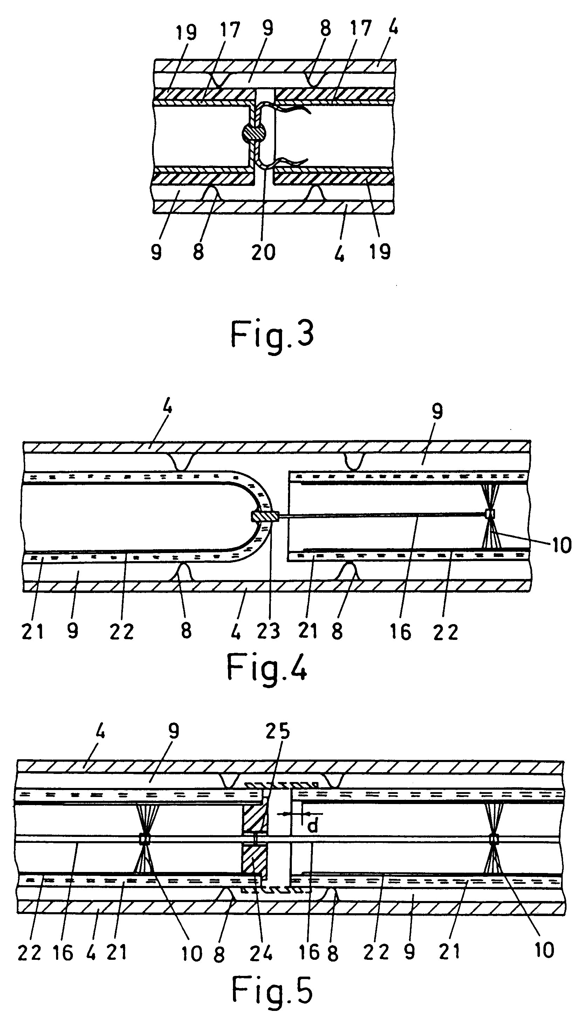

Die vorliegende Erfindung ist insbesondere für Ozonerzeuger mit sogenannten Keramik-Dielektrika hervorragend geeignet. Wie die Ausführungsformen nach Fig. 4 und 5 zeigen, eignet sie sich jedoch auch für Ozonerzeuger mit Glasdielektrikum: An die Stelle von Ozonerzeugern mit Keramik-Dielektrikum treten in Fig. 1 nunmehr solche mit Glasdielektrikum. Diese bestehen gemäss Fig. 4 im wesentlichen aus einem einseitig verschlossenen Glasrohr 21, dessen gesamte innere Oberfläche - abgesehen von einem wenige Millimeter langen Bereich d am offenen Ende-mit einer Metallschicht 22 bedeckt ist, entsprechen also insoweit - abgesehen von der verkürzten Baulänge - den bislang üblichen Innenrohren. Um nun eine elektrische Verbindung zwischen den Metallschichten 22 der (elektrisch) hintereinanderzuschaltenden Segmente zu schaffen, weist das äussere Glasrohr 21 an seinem verschlossenen Ende eine metallische Durchführung 23 auf, die mit der metallischen Schicht 22 elektrisch verbunden ist. Aussen ist die Durchführung 23 mit dem Anschlussteil 16 der dem unseren Glasrohr zugeordneten Kontaktelement 10 verbunden, z.B. verschraubt.

Wie Fig. 5 verdeutlicht, kann auf einseitig verschlossene Glasrohre verzichtet werden. Die Glasrohre 21 weisen jeweils am inneren Ende einen Stopfen 24 auf. Der Anschlussteil 16 des Kontaktelements 10 ist bis zum Stopfen 24 hin verlängert und endet in einer im Stopfen angeordneten Buchse 25 und ist beispielsweise in diese eingeschraubt. Der Anschlussteil 16 des benachbarten Kontaktelements 10 ist von der anderen Seite (von aussen) in diese Buchse eingesteckt, z.B. gleichfalls mit ihr verschraubt. Der Stopfen 24 dient neben der Halterung der Buchse auch als Absperrorgan, das eine Strömung des Einsatzgases durch das Innere des Glasrohrs 21 verhindert.

Anstelle eines (dichtenden) Stopfens 24 können auch dünne Manschetten aus einem ozonresistenten Kunststoff, z.B Teflon, verwendet werden, wie es in Fig. 5 strichliert angedeutet ist. Auch diese sorgen für eine ausreichende mechanische Ent-kopplung zweier hintereinanderliegender Rohre.

Auch bei den Ozonerzeugern mit Glasdielektrikum sind die Innenelektroden voneinander mechanisch entkoppelt und in jeder Kesselhälfte elektrisch in Serie geschaltet, wobei alle Ozonerzeuger einer Kesselhälfte an je einer Sammelschiene 11 angeschlossen sind. Eine derartige Anordnung wird häufig mit "Duplex-Anordnung" bezeichnet.

Selbstverständlich lässt sich das der Erfindung zugrundeliegende Prinzip der Segmentierung auch für sogenannte SimplexOzonerzeuger, d.h. solche anwenden, deren Speisung von nur einer Kesselstirnseite her erfolgt, da die Anzahl von mechanisch in Serie zu schaltenden Segmenten im Grunde genommen nur vor der Kessellänge abhängt.

Sowohl bei Sumplex- als auch bei Duplex-Anordnungen beträgt die Länge eines Segments zwischen 10 cm und 50 cm. Derart kurze Segmente haben eine vernachlässigbare Durchbiegung. Toleranzabweichungen - seien es solche beim metallischen Aussenrohr 4 und/oder bei den Innenrohren 7 bzw. Glasrohren 21, oder Durchbiegungen des Aussenrohres 7 mitteln sich durch die Hintereinanderschaltung praktisch aus.

Somit lassen sich erstmals Ozonerzeuger mit Keramikdielektrikum und kleinen Spaltweiten in wirtschaftlicher Weise herstellen.

**Patentansprüche**

1. Ozonerzeuger mit einer rohrförmigen Aussenelektrode (4) und einer Mehrzahl von Innenelektroden (17; 22), die aufihrer der Aussenelektrode (4) zugewandten Oberfläche eine dielektrische Schicht (19; 21) aufweisen, mit Mitteln (8) zur Distanzierung der Innenelektroden (17; 22) gegenüber der Aussenelektrode (4) und Bildung eines ringförmigen Entladungsspaltes (9) sowie Mitteln (10, 11, 16) zur Verbindung aller Elektroden mit einer Wechselstromquelle, dadurch gekennzeichnet, dass die Innenelektroden (17, 22) aus einer Mehrzahl von hintereinander angeordneten, mechanisch entkoppelten Elektrodensegmenten (7; 21, 22) bestehen, die gruppenweise galvanisch miteinander verbunden sind, und jedes Segment unabhängig von dem ihm unmittelbar benachbarten Segment von der Aussenelektrode (4) distanziert abgestützt ist.

2. Ozonerzeuger nach Anspruch 1, dadurch gekennzeichnet, dass bei Duplex-Anordnung die eine Gruppe mit einer ersten Sammelschiene (11), die andere Gruppe mit der anderen Sammelschiene (11′) verbunden ist, dass bei einer Simplex-Anordnung alle Segmente an eine einzige Sammelschiene (11) angeschlossen sind.

3. Ozonerzeuger nach Anspruch 1 oder 2, dadurch gekennzeichnet, dass die Innenelektrode ein einseitig geschlossenes Metallrohr (17) ist, dessen Aussenwand mit einem Keramik- oder Kunststoff-Keramik-Dielektrikum (18) beschichtet ist.

4. Ozonerzeuger nach Anspruch 3, dadurch gekennzeichnet, dass zur elektrischen Verbindung zwei benachbarter Metallrohre (7) das eine mit einem in das Innere des benachbarten Metallrohres eintauchende Kontaktelement (10, 16; 20) versehen ist.

5. Ozonerzeuger nach Anspruch 1 oder 2, dadurch gekennzeichnet, dass die Innenelektrode als metallische Beschichtung (22) eines Glasrohres (21) oder eines Kunststoffrohres ausgebildet ist.

6. Ozonerzeuger nach Anspruch 5, dadurch gekennzeichnet, dass das Rohr einseitig verschlossen ist und am verschlossenen Ende mit einem in das Innere des ihm benachbarten Glasrohres eintauchenden Kontaktelement (16, 10) versehen ist.

7. Ozonerzeuger nach Anspruch 5, dadurch gekennzeichnet, dass das Rohr (21) beidseitig offen und an einem Ende mit eiem Stopfen (24) versehen ist, welcher Stopfen Mittel (25) zur elektrischen Verbindung der Kontaktelemente (10, 16) benachbarter Glasrohre (21) aufweist.

## Claims

1. Ozone generator with a tubular outer electrode (4) and a plurality of inner electrodes (17; 22) which exhibit a dielectric layer (19; 21) on their surface facing the outer electrode (4), with means (8) for spacing the inner electrodes (17, 22) from the outer electrode (4) and forming of an annular discharge gap (9) and means (10, 11, 16) for connecting all electrodes to an alternating current source, characterised in that the inner electrodes (17; 22) consist of a plurality of cascaded mechanically decoupled electrode segments (7; 21, 22) which are electrically connected to one another in groups, and each segment is supported spaced from the outer electrode (4) independently of the segment immediately adjacent to it.

2. Ozone generator according to Claim 1, characterised in that in a duplex arrangement, one group is connected to a first busbar (11) and the other group is connected to the other busbar (11'), and in that a simplex arrangement, all segments are connected to a single busbar (11).

3. Ozone generator according to Claim 1 or 2, characterised in that the inner electrode is a metal tube (17) which is closed at one end and the outer wall of which is coated with a ceramic or plastic/ceramic dielectric (18).

4. Ozone generator according to Claim 3, characterised in that, for electrically connecting two adjacent tubes (7), one is provided with a contact element (10, 16; 20) which plunges into the interior of the adjacent metal tube.

5. Ozone generator according to Claim 1 or 2, characterised in that the inner electrode is constructed as metallic coating (22) of a glass tube (21) or of a plastic tube.

6. Ozone generator according to Claim 5, characterised in that the tube is closed at one end and is provided at the closed end with a contact element (16, 10) which plunges into the interior of the glass tube adjacent to it.

7. Ozone generator according to Claim 5, characterised in that the tube (21) is open at both ends and is provided at one end with a plug (24), which plug exhibits means (25) for electrically connecting the contact elements (10, 16) of adjacent glass tubes (21).

## Revendications

1. Générateur d'ozone comportant une électrode extérieure tubulaire (4) et une pluralité d'électrodes intérieures (17; 22) qui comportent une couche diélectrique (19; 21) sur leur surface tournée vers l'électrode extérieure (4), des moyens (8) pour espacer les électrodes intérieures (17; 22) de l'électrode extérieure (4) en vue de former un interstice de décharge annulaire (9) et des moyens (10, 11, 16) pour connecter toutes les électrodes à une source de courant alternatif, caractérisé en ce que les électrodes intérieures (17; 22) sont faites d'une pluralité de segments d'électrodes (7; 21, 22) mécaniquement désaccouplés et disposés les uns derrière les autres, qui sont interconnectés galvaniquement en groupes, et chaque segment est monté espacé indépendamment du segment de l'électrode extérieure (4) immédiatement voisin.

2. Générateur d'ozone suivant la revendication 1, caractérisé en ce que, dans le cas d'un montage duplex, le premier groupe est connecté à une première barre omnibus (11) et l'autre groupe est connecté à l'autre barre omnibus (11'), et que, dans un montage simplex, tous les segments sont connectés à une seule barre omnibus (11).

3. Générateur d'ozone suivant la revendication 1 ou 2, caractérisé en ce que l'électrode intérieure est un tube métallique (17) fermé d'un côté dont la paroi extérieure est revêtue d'un diélectrique en céramique ou en matière plastique et céramique (18).

4. Générateur d'ozone suivant la revendication 3, caractérisé en ce que, pour connecter électriquement deux tubes métalliques (7) voisins, le premier est pourvu d'un élément de contact (10, 16; 20) qui plonge dans l'intérieur du tube métallique voisin.

5. Générateur d'ozone suivant la revendication 1 ou 2, caractérisé en ce que l'électrode intérieure a la forme d'un revêtement métallique (22) d'un tube en verre (21) ou d'un tube en matière plastique.

6. Générateur d'ozone suivant la revendication 5, caractérisé en ce que le tube est fermé d'un côté et est pourvu, à son extrémité fermée, d'un élément de contact (16, 10) plongeant dans l'intérieur du tube en verre voisin.

**7.** Générateur d'ozone suivant la revendication 5, caractérisé en ce que le tube (21) est ouvert des deux côtés et est pourvu à une extrémité d'un bouchon (24), ce bouchon comprenant un moyen (25) destiné à connecter électriquement les éléments de contact (10, 16) de tubes en verre (21) voisins.

Fig.1

Fig.2

## Fig.3

## Fig.4

## Fig.5